(19)

**Europäisches Patentamt**
**European Patent Office**
**Office européen des brevets**

(11) **EP 4 183 810 A1**

(12) **EUROPEAN PATENT APPLICATION**
published in accordance with Art. 153(4) EPC

(43) Date of publication:
**24.05.2023 Bulletin 2023/21**

(21) Application number: **21841199.9**

(22) Date of filing: **06.07.2021**

(51) International Patent Classification (IPC):
*C08G 18/08* (2006.01)    *C08G 18/00* (2006.01)
*C08G 18/12* (2006.01)    *C08G 18/32* (2006.01)
*C08G 18/48* (2006.01)    *C08G 18/66* (2006.01)
*C08J 5/18* (2006.01)    *C08L 75/12* (2006.01)

(52) Cooperative Patent Classification (CPC):
**C08G 18/00; C08G 18/08; C08G 18/12;**
**C08G 18/32; C08G 18/48; C08G 18/66; C08J 5/18;**
**C08L 75/12**

(86) International application number:
**PCT/JP2021/025398**

(87) International publication number:
**WO 2022/014398 (20.01.2022 Gazette 2022/03)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **17.07.2020 JP 2020122883**

(71) Applicants:
• **Taiwan Nicca Chemical Co., Ltd.**
  **Taoyuan City, 328451 (TW)**

• **Nicca Chemical Co., Ltd.**
  **Fukui-shi, Fukui 910-8670 (JP)**

(72) Inventors:
• **SUMITOMO, Hiroshi**
  **Taoyuan City 328451 (TW)**
• **TOCHIKAWA, Hirofumi**
  **Taoyuan City 328451 (TW)**
• **NISHINO, Masakazu**
  **Fukui-shi, Fukui 910-8670 (JP)**

(74) Representative: **Hoffmann Eitle**
**Patent- und Rechtsanwälte PartmbB**
**Arabellastraße 30**
**81925 München (DE)**

(54) **AQUEOUS POLYURETHANE RESIN COMPOSITION AND POLYURETHANE FILM**

(57)    An aqueous polyurethane resin composition comprising:

an aqueous polyurethane resin which is a chain-extended product obtained from a neutralized product of an isocyanate-terminated prepolymer which is a reaction product of (A) a polyisocyanate, (B) polyols, and (C) a diol having a carboxy group and/or a carboxylate group, by using (D) a polyamine having two or more amino groups and/or imino groups in one molecule, wherein
(B) the polyols contain (b-1) a polypropylene glycol having a number average molecular weight of 600 to 10,000 and (b-2) a polytetramethylene glycol having a number average molecular weight of 1,000 to 4,000,
a total amount of (b-1) the polypropylene glycol and (b-2) the polytetramethylene glycol accounts for 50% by mass or more of an entire amount of (B) the polyols, and
a mass ratio between (b-1) the polypropylene glycol and (b-2) the polytetramethylene glycol is (b-1):(b-2)=0.5:99.5 to 60:40.

EP 4 183 810 A1

**Description**

[Technical Field]

The present invention relates to an aqueous polyurethane resin composition and a polyurethane film.

[Background Art]

In general, natural rubbers and synthetic rubbers used as materials having elasticity contain allergic substances, which have risk of causing an allergic reaction in some users when coming into contact with the materials. For this reason, there has been a demand for a material that can be used instead of natural rubbers and synthetic rubbers in usages in which the material comes into contact with the skins (for example, usage for gloves). As such a material, polyurethane having rubber elasticity has been attracting attention.

Aqueous polyurethane resins are used in various usages such as paints, adhesives, synthetic leathers, artificial leathers, film-formed bodies, for example. Among these, the film-formed bodies include, for example, gloves, fingertips, condoms, and the like, and these are generally produced by a salt coagulation method. For example, Japanese Unexamined Patent Application Publication No. 2015-101625 (PTL 1) describes a polyurethane aqueous dispersion obtained by: neutralizing an isocyanate-terminated prepolymer obtained by at least reacting a polyisocyanate (A), a random copolymer (B) of ethylene oxide and tetrahydrofuran, a polyol (C) having a number average molecular weight of 500 to 5000, a diol (E) compound having a carboxy group; and dispersing a neutralized product thus obtained in water, as a polyurethane aqueous dispersion to be used for film-formed bodies for use in gloves, and also states that this polyurethane aqueous dispersion has favorable processing suitability (film formability) in producing film-formed bodies by the salt coagulation method. However, there is a problem that the obtained film-formed bodies are poor in tensile strength at break, and when polycarbonate diol is added in order to improve this, the flexibility of the film-formed bodies decreases.

In addition, as a polyurethane film produced by a method other than the salt coagulation method, for example, International Application Japanese-Phase Publication No. 2008-506830 (PTL 2) describes a polyurethane film obtained by using an aqueous polyurethane emulsion composition containing 1 to 5 parts by mass of a polyisocyanate, 15 to 20 parts by mass of a polyester polyol, 0.1 to 3 parts by mass of an ionic compound such as dimethylol propionic acid, 0.1 to 1 parts by mass of a chain extender, 25 to 60 parts by mass of water, and 0 to 45 parts by mass of a solvent, and also states that this polyurethane film is excellent in antistatic property. However, there is a problem that this polyurethane film is poor in flexibility.

[Citation List]

[Patent Literature]

[PTL 1] Japanese Unexamined Patent Application Publication No. 2015-101625
[PTL 2] International Application Japanese-Phase Publication No. 2008-506830

[Summary of Invention]

[Technical Problem]

The present invention has been made in view of the above-described problems of the conventional techniques, and an object thereof is to provide an aqueous polyurethane resin composition which has favorable film formability and which makes it possible to obtain a polyurethane film combining favorable flexibility, tensile strength at break, and elongation at break.

[Solution to Problem]

As a result of conducting earnest study to achieve the above-described object, the present inventors have found that an aqueous polyurethane resin composition comprising a polypropylene glycol having a specific number average molecular weight and a polytetramethylene glycol having a specific number average molecular weight as polyols in a specific mass ratio and in specific proportions relative to the entire amount of the polyols has favorable film formability, and that it is possible to obtain a polyurethane film combining favorable flexibility, tensile strength at break, and elongation at break by using such an aqueous polyurethane resin composition, and thus completed the present invention.

Specifically, an aqueous polyurethane resin composition of the present invention comprises:

an aqueous polyurethane resin that is a chain-extended product obtained from a neutralized product of an isocyanate-terminated prepolymer which is a reaction product of (A) a polyisocyanate, (B) polyols, (C) a diol having a carboxy group and/or a carboxylate group, by using (D) a polyamine having two or more amino groups and/or imino groups in one molecule, wherein

(B) the polyols contain (b-1) a polypropylene glycol having a number average molecular weight of 600 to 10,000 and (b-2) a polytetramethylene glycol having a number average molecular weight of 1,000 to 4,000,

a total amount of (b-1) the polypropylene glycol and (b-2) the polytetramethylene glycol accounts for 50% by mass or more of an entire amount of (B) the polyols, and

a mass ratio between (b-1) the polypropylene glycol and (b-2) the polytetramethylene glycol is (b-1):(b-2)=0.5:99.5 to 60:40.

In the aqueous polyurethane resin composition of the present invention, a content of free isocyanate groups in the isocyanate-terminated prepolymer is preferably 0.2 to 3.5% by mass, and a content of carboxy groups and carboxylate groups in the aqueous polyurethane resin is preferably 0.3 to 1.0% by mass, and further a content of polyamines having three or more amino groups and/or imino groups in one molecule in (D) the polyamine having two or more amino groups and/or imino groups in one molecule is preferably 8 to 96% by mass.

In addition, the aqueous polyurethane resin composition of the present invention preferably further comprises a carbodiimide-based cross-linking agent, and also preferably further comprises at least one surfactant selected from the group consisting of anionic surfactants and nonionic surfactants.

A polyurethane film of the present invention is formed by using such an aqueous polyurethane resin composition of the present invention.

[Advantageous Effects of Invention]

The present invention makes it possible to obtain an aqueous polyurethane resin composition which has favorable film formability and makes it possible to obtain a polyurethane film combining favorable flexibility, tensile strength at break, and elongation at break.

[Description of Embodiments]

Hereinafter, the present invention is described in detail in terms of favorable embodiments.

<Aqueous Polyurethane Resin Composition>

First, the aqueous polyurethane resin composition of the present invention is described. The aqueous polyurethane resin composition of the present invention comprises an aqueous polyurethane resin which is a chain-extended product obtained from a neutralized product of an isocyanate-terminated prepolymer which is a reaction product of (A) a polyisocyanate, (B) polyols, and (C) a diol having a carboxy group and/or a carboxylate group, by using (D) a polyamine having two or more amino groups and/or imino groups in one molecule.

(A) Polyisocyanate

(A) The polyisocyanate used in the present invention is not particularly limited, and includes, for example, aromatic polyisocyanates, aliphatic polyisocyanates, and alicyclic polyisocyanates, and the like. The aromatic polyisocyanates include, for example, toluene diisocyanate (TDI), xylylene diisocyanate (XDI), diphenylmethane diisocyanate (MDI), naphthalene diisocyanate (NDI), tetramethylxylylene diisocyanate, and the like. The aliphatic polyisocyanates include, for example, hexamethylene diisocyanate (HDI) and trimethyl hexamethylene diisocyanate, and the like. The alicyclic polyisocyanates include, for example, 1,3-bis(isocyanatomethyl)cyclohexane, isophorone diisocyanate (IPDI), dicyclohexylmethane diisocyanate (H12MDI), and norbornane diisocyanate, and the like. One of such polyisocyanates may be used or two or more of these may be used in combination.

(B) Polyols

(B) The polyols used in the present invention contain at least (b-1) a polypropylene glycol and (b-2) a polytetramethylene glycol.

The number average molecular weight of (b-1) the polypropylene glycol is 600 to 10,000. By using (b-1) the polypropylene glycol having such a number average molecular weight, it is possible to obtain an aqueous polyurethane resin composition having favorable film formability as well as a polyurethane film combining favorable flexibility, tensile strength, and elongation at break. If the number average molecular weight of (b-1) the polypropylene glycol is less than the lower limit, the film formability of the aqueous polyurethane resin composition and the flexibility of the obtained polyurethane film decrease, while if the number average molecular weight of (b-1) the polypropylene glycol is more than the upper limit, the tensile strength of the obtained polyurethane film decreases. In addition, from the viewpoint that the flexibility of the polyurethane film is improved, the lower limit of the number average molecular weight of (b-1) the polypropylene glycol is preferably 800 or more, and more preferably 1,000 or more. Moreover, from the viewpoint that the tensile strength of the polyurethane film is improved, the upper limit of the number average molecular weight of (b-1) the polypropylene glycol is preferably 8,000 or less, and more preferably 5,000 or less.

The number average molecular weight of (b-2) the polytetramethylene glycol is 1,000 to 4,000. By using (b-2) the polytetramethylene glycol having such a number average molecular weight, it is possible to obtain a aqueous polyurethane resin composition having favorable film formability as well as a polyurethane film combining favorable flexibility, tensile strength, and elongation at break. If the number average molecular weight of (b-2) the polytetramethylene glycol is less than the lower limit, the film formability of the aqueous polyurethane resin composition and the flexibility of the obtained polyurethane film decrease, while if the number average molecular weight of (b-2) the polytetramethylene glycol is more than the upper limit, the tensile strength of the obtained polyurethane film decreases. In addition, from the viewpoint that the flexibility of the polyurethane film is improved, the lower limit of the number average molecular weight of (b-2) the polytetramethylene glycol is preferably 1,500 or more, and more preferably 2,000 or more. Moreover, from the viewpoint that the tensile strength of the polyurethane film is improved, the upper limit of the number average molecular weight of (b-2) the polytetramethylene glycol is preferably 3,500 or less.

In the aqueous polyurethane resin composition of the present invention, the mass ratio between (b-1) the polypropylene glycol and (b-2) the polytetramethylene glycol is (b-1):(b-2) = 0.5:99.5 to 60:40. When (b-1) the polypropylene glycol and (b-2) the polytetramethylene glycol are contained in such a mass ratio, it is possible to obtain an aqueous polyurethane resin composition having favorable film formability as well as a polyurethane film combining favorable flexibility, tensile strength, and elongation at break. If the mass ratio is less than the lower limit, the film formability of the aqueous polyurethane resin composition decreases, while if the mass ratio is more than the upper limit, the tensile strength of the obtained polyurethane film decreases. In addition, from the viewpoint that the tensile strength of the polyurethane film is improved, the mass ratio is preferably (b-1):(b-2) = 0.5:99.5 to 50:50.

In addition, in the aqueous polyurethane resin composition of the present invention, the total amount of (b-1) the polypropylene glycol and (b-2) the polytetramethylene glycol accounts for 50% by mass or more of the entire amount of (B) the polyols. When (b-1) the polypropylene glycol and (b-2) the polytetramethylene glycol are contained in such a total amount, it is possible to obtain an aqueous polyurethane resin composition having favorable film formability as well as a polyurethane film combining favorable flexibility, tensile strength, and elongation at break. If the total amount is less than the lower limit, the film formability of the aqueous polyurethane resin composition decreases, or the properties of the obtained polyurethane film decrease. In addition, from the viewpoint that a decrease in film formability of the aqueous polyurethane resin composition and a decrease in properties of the obtained polyurethane film are suppressed, the total amount is preferably 70% by mass or more, more preferably 80% by mass or more, further preferably 90% by mass or more, and particularly preferably 95% by mass or more. Note that the upper limit of the total amount is 100% by mass, which is the case where (B) the polyols are composed of only (b-1) the polypropylene glycol and (b-2) the polytetramethylene glycol.

In the aqueous polyurethane resin composition of the present invention, a polyol (hereinafter referred to as a "different polyol") other than (b-1) the polypropylene glycol and (b-2) the polytetramethylene glycol, which is used in combination in the case where the total amount of (b-1) the polypropylene glycol and (b-2) the polytetramethylene glycol is less than 100% by mass relative to the entire amount of (B) the polyols, includes, for example, a low molecular weight polyol having a number average molecular weight of 400 or less, a low molecular weight polypropylene glycol having a number average molecular weight of less than 600, a low molecular weight polytetramethylene glycol having a number average molecular weight of less than 1,000, a polyether polyol having a number average molecular weight of 500 to 5,000 (except for (b-1) the polypropylene glycol and (b-2) the polytetramethylene glycol), a polycarbonate polyol, a polyester polyol, and the like.

In the aqueous polyurethane resin composition of the present invention, it is necessary that the content of such a different polyol be 50% by mass or less relative to the entire amount of (B) the polyols. If the content of the different polyol is more than the upper limit, the film formability of the aqueous polyurethane resin composition decreases or the properties of the obtained polyurethane film decrease, depending on the type of the different polyol used in combination. For example, in the case where the above-described low molecular weight polyol, polycarbonate polyol, or polyester polyol is contained in an amount more than 50% by mass, the film formability of the aqueous polyurethane resin composition decreases or the flexibility and the elongation at break of the obtained polyurethane film decrease. In addition, in the case where the low molecular weight polypropylene glycol, the low molecular weight polytetramethylene glycol, or the polyether polyol other than (b-1) the polypropylene glycol and (b-2) the polytetramethylene glycol is contained in an amount more than 50% by mass, the tensile strength of the obtained polyurethane film decreases.

The above-described low molecular weight polyol includes, for example, ethylene glycol, 1,4-butanediol, hexamethylene glycol, trimethylolpropane, pentaerythritol, sorbitol, and the like. The above-described polyether polyol other than (b-1) the polypropylene glycol and (b-2) the polytetramethylene glycol includes, for example, polyols composed of block or random copolymers of two or more selected from ethylene oxide, propylene oxide, and tetrahydrofuran, polyethylene glycol, and the like. The above-described polycarbonate polyol includes, for example, those obtained by dealcoholization reaction, dephenolization reaction, and the like between a polyol (for example, ethylene glycol, 1,2-propanediol, 1,3-propanediol, 1,2-butanediol, 1,3-butanediol, 1,4-butanediol, 1,5-pentanediol, 1,6-hexanediol, 3-methyl-1,5-pentanediol, neopentyl glycol, 1,8-octanediol, 1,9-nonanediol, diethylene glycol, dipropylene glycol, 1,4-cyclohexanedimethanol, or ethylene oxide or propylene oxide adducts of bisphenol A, trimethylolpropane, glycerin, pentaerythritol, and the like) and a carbonate (for example, diethylene carbonate, dimethyl carbonate, diethyl carbonate, diphenyl carbonate, and the like). The above-described polyester polyol includes, for example, those obtained by polycondensation reaction between a dibasic acid (for example, phthalic acid, isophthalic acid, terephthalic acid, naphthalenedicarboxylic acid, succinic acid, malonic acid, adipic acid, sebacic acid, 1,4-cyclohexyl dicarboxylic acid, maleic acid, fumaric acid, and the like) and the polyol presented as raw materials for the above-described polycarbonate polyol. One of such different polyols may be used alone or two or more of these may be used in combination.

(C) Diol

(C) The diol having a carboxy group (-COOH) and/or carboxylate group (-COO$^-$) (hereinafter, these are collectively referred as a "carboxy group and the like") which is used in the present invention includes, for example, 2,2-dimethylol propionic acid (DMPA), 2,2-dimethylol butanoic acid (DMBA), and salts of these. The salts include ammonium salts, mono-, di-, or tri-alkyl (preferably, alkyl having 1 to 4 carbon atoms) amine salts, mono-, di-, or tri-alkanol (preferably, alkanol having 1 to 4 carbon atoms) salts, and alkali metal salts (preferably, sodium salt and potassium salt).

In addition, in the aqueous polyurethane resin composition of the present invention, as (C) the diol, a polyester diol having a pendant carboxy group or the like, which is obtained by reacting a diol having above-described carboxy group or the like and a dicarboxylic acid (for example, an aromatic dicarboxylic acid, an aliphatic dicarboxylic acid, or the like) may be used. Moreover, a polyester diol obtained by reacting a diol that has the above-described carboxy group or the like and a diol that does not have the above-described carboxy group or the like may be used as (C) the diol.

In the aqueous polyurethane resin composition of the present invention, one of such (C) diols may be used alone or two or more of these may be used in combination.

[Isocyanate-terminated Prepolymer]

The isocyanate-terminated prepolymer used in the present invention is a reaction product of (A) the polyisocyanate, (B) the polyols, and (C) the diol having a carboxy group or the like.

The method for producing such an isocyanate-terminated prepolymer is not particularly limited, and includes, for example, conventionally known so-called one-shot method of single-stage system and isocyanate polyaddition reaction method of multi-stage system. The reaction temperature is preferably 40 to 150°C. At this time, a reaction catalyst such as dibutyltin dilaurate, stannous octoate, dibutyltin-2-ethylhexanoate, triethylamine, triethylenediamine, N-methylmorpholine, or bismuth tris(2-ethylhexanoate), or a reaction inhibitor such as phosphoric acid, sodium hydrogenphosphate, para-toluenesulfonic acid, adipic acid, or benzoyl chloride may be added as necessary.

In addition, during the reaction or after the completion of the reaction, an organic solvent that does not react with isocyanate groups may be added. Such an organic solvent includes, for example, acetone, methyl ethyl ketone, methyl isobutyl ketone, tetrahydrofuran, dioxane, dimethyl formamide, dimethyl sulfoxide, toluene, xylene, ethyl acetate, butyl acetate, methylene chloride, and the like. These organic solvents can be removed by heating under reduced pressure after emulsification and dispersion and chain extension of the prepolymer.

In the production of an isocyanate-terminated prepolymer, a molar ratio (NCO/OH) between isocyanate groups and hydroxyl groups in the raw materials is preferably 100/95 to 100/65, more preferably 100/90 to 100/70, and particularly preferably 100/85 to 100/75. By adjusting the molar ratio between isocyanate groups and hydroxyl groups in the raw materials within the above-described range, the obtained isocyanate-terminated prepolymer can be easily emulsified and dispersed, and an aqueous polyurethane resin composition having favorable film formability as well as a polyurethane film combining favorable flexibility, tensile strength, and elongation at break can be obtained. If the NCO/OH is less than the lower limit, there is a tendency that the obtained isocyanate-terminated prepolymer has high viscosity and is unlikely to be emulsified and dispersed, and there is a tendency that the tensile strength of the obtained polyurethane film decreases, while if the NCO/OH is more than the upper limit, there is a tendency that the film formability of the obtained aqueous polyurethane resin composition as well as the flexibility and the elongation at break of the obtained polyurethane film decrease.

The content of free isocyanate groups in the isocyanate-terminated prepolymer thus obtained is preferably 0.2 to 3.5% by mass, more preferably 0.3 to 3.4% by mass, and particularly preferably 0.5 to 2.5% by mass. By using an isocyanate-terminated prepolymer having such a content of free isocyanate groups, an aqueous polyurethane resin composition having favorable film formability as well as a polyurethane film combining favorable flexibility, tensile strength, and elongation at break can be obtained. If the content of free isocyanate groups is less than the lower limit, there is a tendency that the tensile strength of the obtained polyurethane film decreases, while if the content of free isocyanate groups is more than the upper limit, there is a tendency that the film formability of the obtained aqueous polyurethane resin composition as well as the flexibility and the elongation at break of the obtained polyurethane film decrease.

Note that all of (A) the polyisocyanate, (B) the polyols, and (C) the diol have multiple reaction points, and thus the isocyanate-terminated prepolymer obtained by reacting (A) the polyisocyanate, (B) the polyols, and (C) the diol has a complicated structure, which is impossible to directly express in general formula (structural formula).

[Neutralized Product of Isocyanate-terminated Prepolymer]

The neutralized product of the isocyanate-terminated prepolymer used in the present invention is obtained by neutralizing the carboxy group and the like in the isocyanate-terminated prepolymer. Such a neutralized product of the isocyanate-terminated prepolymer may be produced (i) by a known method of neutralizing the carboxy group and the like in the isocyanate-terminated prepolymer obtained by reacting (A) the polyisocyanate, (B) the polyols, and (C) the diol, or may be produced (ii) by mixing (A) the polyisocyanate, (B) the polyols, and (C) the diol, thereafter by a known method of neutralizing the carboxy group and the like in (C) the diol, and subsequently reacting (C) the neutralized diol, (A) the polyisocyanate, and (B) the polyols. In addition, the neutralized product of the isocyanate-terminated prepolymer can also be produced (iii) by reacting (A) the polyisocyanate, (B) the polyols, and (C) the diol in which the carboxy group and the like is a salt of a carboxyl group.

In the production methods of (i) and (ii) described above, the basic compound used for neutralizing the carboxy group and the like is not particularly limited, and includes, for example, amines such as trimethylamine, triethylamine, tri-n-propylamine, tributylamine, N-methyldiethanolamine, N,N-dimethyl monoethanolamine, N,N-diethyl monoethanolamine, and triethanolamine; hydroxides of alkali metals such as potassium hydroxide and sodium hydroxide; ammonia, and the like. Among these, tertiary amines such as trimethylamine, triethylamine, tri-n-propylamine, and tributylamine are particularly preferable.

In the neutralization of the the carboxy group and the like in the production methods of (i) and (ii) described above, the amount of the basic compound for neutralization used is preferably 0.5 to 1.5 equivalents, more preferably 0.6 to 1.4 equivalents, and particularly preferably 0.7 to 1.3 equivalents, relative to the carboxy group and the like. By adjusting the amount of the basic compound for neutralization used within the above-described range, the obtained isocyanate-terminated prepolymer can be easily emulsified and dispersed, and an aqueous urethane resin composition having favorable storage stability can be obtained. If the amount of the basic compound for neutralization used is less than the lower limit, there is a tendency that the emulsifiability and the storage stability deteriorate. Meanwhile, even when the basic compound for neutralization in an amount exceeding the upper limit is added, the emulsifiability or the storage stability is not improved any more, and it is thus not economically favorable.

In the neutralized product of the isocyanate-terminated prepolymer, it is preferable that 50% or more of the total number of moles of the carboxy group (-COOH) and the carboxylate group (-COO⁻) derived from (C) the diol be the carboxylate group ($-COO^-$), it is more preferable that 60% or more thereof be the carboxylate group ($-COO^-$), and it is further preferable that 70% or more thereof be the carboxylate group ($-COO^-$). By neutralizing the carboxy group and the like such that the proportion of the carboxylate group ($-COO^-$) becomes within the above-described range, the obtained isocyanate-terminated prepolymer can be easily emulsified and dispersed, and an aqueous urethane resin composition having favorable storage stability can be obtained. If the proportion of the carboxylate group ($-COO^-$) is less than the lower limit, there is a tendency that the emulsifiability and the storage stability deteriorate.

(D) Polyamine

(D) The polyamine having two or more amino groups and/or imino groups (hereinafter, these are collectively referred to as "amino groups and the like") in one molecule (chain extender) used in the present invention includes, for example, a polyamine having two amino groups and the like in one molecule such as ethylenediamine, tetramethylenediamine, hexamethylenediamine, hydrazine, piperazine, isophoronediamine, norbornanediamine, diaminodiphenylmethane, tolylenediamine, or xylylenediamine; and a polyamine having three or more amino groups and the like in one molecule such as diethylenetriamine, triethylenetetramine, tetraethylenepentamine, or iminobispropylamine. One of such (D) polyamines may be used alone or two or more of these may be used in combination. In addition, among these (D) polyamines, as a polyamine having two amino groups and the like in one molecule, ethylenediamine, hydrazine, piperazine, isophoronediamine, or norbornanediamine is particularly preferable, and as a polyamine having three or more amino groups and the like in one molecule, diethylenetriamine or iminobispropylamine is particularly preferable.

In (D) the polyamine having two or more amino groups and the like in one molecule, the content of a polyamine having three or more (preferably 3 to 4, more preferably 3) amino groups and the like in one molecule is preferably 8 to 96% by mass, more preferably 10 to 90% by mass, and further preferably 20 to 80% by mass. By adjusting the content of a polyamine having three or more amino groups and the like in one molecule within the above-described range, an aqueous polyurethane resin having appropriate cross-linking density is formed, and an aqueous polyurethane resin composition having favorable film formability as well as a polyurethane film having favorable flexibility, tensile strength, and elongation at break can be obtained. If the content of a polyamine having three or more amino groups and the like in one molecule is less than the lower limit, there is a tendency that the cross-linking density of the obtained aqueous polyurethane resin decreases, so that the tensile strength of the obtained polyurethane film decreases, while if the content of a polyamine having three or more amino groups and the like in one molecule is more than the upper limit, there is a tendency that the cross-linking density of the obtained aqueous polyurethane resin becomes too high, so that the flexibility and the elongation at break of the obtained polyurethane film decrease.

[Aqueous Polyurethane Resin]

The aqueous polyurethane resin contained in the aqueous polyurethane resin composition of the present invention is one (chain-extended product) obtained by chain-extending the neutralized product of the isocyanate-terminated prepolymer by using (D) the polyamine.

(Emulsification and dispersion)

When the neutralized product of the isocyanate-terminated prepolymer is chain-extended, first, the neutralized product of the isocyanate-terminated prepolymer is emulsified and dispersed in water. The method for emulsification and dispersion is not particularly limited, and includes, for example, conventionally known methods using a homomixer, a homogenizer, a dispersing device, and the like. The neutralized product of the isocyanate-terminated prepolymer can be emulsified and dispersed in water at a temperature within a range of 0 to 40°C even when no emulsifier is added in particular. This makes it possible to suppress reaction between isocyanate groups and water. In addition, when the neutralized product of the isocyanate-terminated prepolymer is emulsified and dispersed, a reaction inhibitor such as phosphoric acid, sodium dihydrogen phosphate, disodium hydrogen phosphate, para-toluenesulfonic acid, adipic acid, or benzoyl chloride may be added as necessary.

(Chain Extension)

Next, the neutralized product of the isocyanate-terminated prepolymer thus emulsified and dispersed in water is chain-extended by using (D) the polyamine to form an aqueous polyurethane resin. In this way, the aqueous polyurethane resin composition of the present invention is obtained.

In chain-extending the neutralized product of the isocyanate-terminated prepolymer, the amount of (D) the polyamine used is preferably an amount containing 0.5 to 1.5 equivalents of amino groups and the like, more preferably an amount containing 0.6 to 1.4 equivalents of amino groups and the like, and particularly preferably an amount containing 0.7 to 1.3 equivalents of amino groups and the like, relative to the free isocyanate groups of the neutralized product of the isocyanate-terminated prepolymer. By adjusting the amount of (D) the polyamine used within the above-described range, an aqueous polyurethane resin having an appropriate cross-linking density is formed, and an aqueous polyurethane resin composition having favorable film formability as well as a polyurethane film having favorable flexibility, tensile strength, and elongation at break can be obtained. If the amount of (D) the polyamine used is less than the lower limit, there is a tendency that the extension of the molecular weight becomes insufficient, so that the tensile strength of the obtained polyurethane film decreases, while in the case where the amount of (D) the polyamine used exceeds the upper limit as well, there is a tendency that the extension of the molecular weight becomes insufficient, so that the tensile strength of the obtained polyurethane film decreases, or amino groups remain in the terminals, so that the obtained polyurethane film is yellowed.

The method for chain extension is not particularly limited, and for example, a method in which (D) the polyamine is added into an emulsified and dispersed product of the neutralized product of the isocyanate-terminated prepolymer to cause chain extension or a method in which an emulsified and dispersed product of the neutralized product of the isocyanate-terminated prepolymer is added into (D) the polyamine to cause chain extension is preferable. The reaction between the neutralized product of the isocyanate-terminated prepolymer and amines is conducted at a reaction temperature of 20 to 50°C, and is normally completed 30 to 120 minutes after the neutralized product of the isocyanate-terminated prepolymer and (D) the polyamine are mixed.

In the aqueous polyurethane resin thus obtained, the content of the carboxy group and the like is preferably 0.3 to 1.0% by mass, more preferably 0.4 to 0.8% by mass, and particularly preferably 0.5 to 0.7% by mass. By adjusting the content of the carboxy group and the like within the above-described range, an aqueous polyurethane resin composition having favorable storage stability and favorable film formability in the salt coagulation method can be obtained. If the content of the carboxy group and the like is less than the lower limit, there is a tendency that the storage stability of the obtained aqueous polyurethane resin composition decreases, while if the content of the carboxy group and the like is more than the upper limit, there is a tendency that in the production of a polyurethane film by the salt coagulation method, the coagulation with salt is intensified, so that the elongation at break of the obtained polyurethane film decreases, or cracks are likely to occur in the obtained polyurethane film.

Note that (D) the polyamine also has multiple reaction points as in the cases of (A) the polyisocyanate, (B) the polyols, and (C) the diol, and thus the chain-extended product (aqueous polyurethane resin) of the neutralized product of the isocyanate-terminated prepolymer obtained by chain-extending the neutralized product of the isocyanate-terminated prepolymer by using (D) such polyamine also has a complicated structure like the above-described isocyanate-terminated prepolymer, which is impossible to directly express in general formula (structural formula).

[Aqueous Polyurethane Resin Composition]

An aqueous polyurethane resin composition of the present invention comprises the aqueous polyurethane resin, that is, a chain-extended product obtained from the neutralized product of the isocyanate-terminated prepolymer, by using (D) the polyamine. In the aqueous polyurethane resin composition of the present invention, the non-volatile content of polyurethane (resin solid concentration) is preferably 20 to 60% by mass, and more preferably 30 to 50% by mass. The aqueous polyurethane resin composition having such non-volatile content of polyurethane has favorable film formability. The non-volatile content of polyurethane can be adjusted by adding or removing water to or from the aqueous polyurethane resin composition. In addition, in the case where an organic solvent is contained in the aqueous polyurethane resin composition, it is preferable to distill away the organic solvent under reduced pressure at a temperature of 30 to 80°C, for example.

(Cross-linking Agent)

In addition, it is preferable that the aqueous polyurethane resin composition of the present invention contain a cross-linking agent that can react with carboxy groups in the aqueous polyurethane resin during the film forming. Such a cross-linking agent includes, for example, a polyepoxy-based cross-linking agent, a water-dispersible carbodiimide-based cross-linking agent, a water-soluble oxazoline-based cross-linking agent, a water-dispersible polyisocyanate-based cross-linking agent, and the like. Among these cross-linking agents, a water-dispersible carbodiimide-based cross-linking agent is preferable from the viewpoint that it allows all the flexibility, tensile strength, and elongation at break of the obtained polyurethane film to be achieved.

The water-dispersible carbodiimide-based cross-linking agent is not particularly limited, and includes, for example, one obtained by emulsifying and dispersing a carbodiimide compound obtained by subjecting a polyisocyanate having two or more isocyanate groups in one molecule and a sulfonic group-containing compound or a nonionic hydrophilic group compound to carbon dioxide-releasing reaction in the presence of a carbodiimidization catalyst. The polyisocyanate includes, for example, 4,4'-dicyclohexylmethane diisocyanate, tetramethylxylylene diisocyanate, isophorone diisocyanate, 2,4,6-triisopropylphenyl diisocyanate, 4,4'-diphenylmethane diisocyanate, tolylene diisocyanate, hydrogenated tolylene diisocyanate, and the like.

The content of the cross-linking agent is such an amount that the content of the reactive groups contained in the cross-linking agent becomes preferably 1.0 to 150 mol, and more preferably 2.5 to 120 mol relative to the content 100 mol of the carboxy group and the like in the aqueous polyurethane resin. By adjusting the content of the cross-linking agent within the above-described range, the aqueous polyurethane resin can be cross-linked at an appropriate cross-linking density, and a polyurethane film having favorable flexibility, tensile strength, and elongation at break can be obtained. If the content of the cross-linking agent is less than the lower limit, there is a tendency that the cross-linking density of the aqueous polyurethane resin decreases, and the tensile strength of the obtained polyurethane film decreases, while if the content of the cross-linking agent is more than the upper limit, there is a tendency that the cross-linking density of the aqueous polyurethane resin becomes too high, so that the flexibility and the elongation at break of the obtained polyurethane film decrease.

(Surfactant)

Moreover, it is preferable that the aqueous polyurethane resin composition of the present invention further contain at least one surfactant selected from the group consisting of anionic surfactants and nonionic surfactants. When the aqueous polyurethane resin composition of the present invention contains the surfactant, the storage stability and the film formability of the aqueous polyurethane resin composition, and the flexibility, the tensile strength, and the elongation at break of the obtained polyurethane film are improved.

The anionic surfactants include aliphatic carboxylic acid salts (8 to 22 carbon atoms), alkyl sulfuric acid ester salts (8 to 22 carbon atoms), alkyl sulfonic acid salts (8 to 22 carbon atoms), polyoxyalkylene alky ether sulfuric acid ester salts (the alkyl group has 8 to 22 carbon atoms, the oxyalkylene group includes an oxyethylene group, an oxypropylene group, and the like, and only one of these may be added or two or more of these may be added, and the number of moles added is 1 to 20), polyoxyalkylene phenyl ether sulfuric acid ester salts (the oxyalkylene groups include an oxyethylene group, an oxypropylene group, and the like, and only one of these may be added or two or more of these may be added, and the number of moles added is 1 to 20), polyoxyalkylene styryl phenyl ether sulfuric acid ester salts (the number of styryl group is 1 to 3, the oxyalkylene groups include an oxyethylene group, an oxypropylene group, and the like, and only one of these may be added or two or more of these may be added, and the number of moles added is 1 to 20), sulfated oils, sulfated aliphatic acid esters, and alkyl phosphoric acid mono- or di-ester salts (carbon atoms 3 to 22), and among these, alkyl sulfuric acid ester salts, polyoxyalkylene alky ether sulfuric acid ester salts, and polyoxyalkylene styryl phenyl ether sulfuric acid ester salts are preferable. The salts include salts of alkali metals such as sodium, potassium, ammonium salt, and salts of mono-, di-, or trialkanolamines (the portion of alkanols has 1 to 4 carbon atoms). One of these anionic surfactants may be used alone or two or more of these may be used in combination.

The nonionic surfactants include alkylene oxide adducts of ethylenediamine (the alkylene oxides include ethylene oxide, propylene oxide, and the like, and only one of these may be added or two or more of these may be added, and the number of moles added is 3 to 500), polyoxyethylene-polyoxypropylene copolymer (the total number of moles of oxyethylene groups and oxypropylene groups added is 3 to 500), alkylene oxide adducts of aliphatic alcohols (carbon atoms 8 to 22) (the alkylene oxides include ethylene oxide, propylene oxide, and the like, and only one of these may be added or two or more of these may be added, and the number of moles added is 3 to 100), alkylene oxide adducts of mono-, di-, or tri-styrenated phenols (the alkylene oxides include ethylene oxide, propylene oxide, and the like, and only one of these may be added or two or more of these may be added, and the number of moles added is 3 to 100), and among these, alkylene oxide adducts of mono-, di-, or tri-styrenated phenols are preferable. One of these nonionic surfactants may be used alone or two or more of these may be used in combination.

The method for blending the surfactant in the aqueous polyurethane resin composition of the present invention is not particularly limited, and for example, the surfactant may be added, for example, when the neutralized product of the isocyanate-terminated prepolymer is emulsified and dispersed in water during the preparation of the aqueous polyurethane resin composition, or the surfactant may be added, for example, when the non-volatile content of polyurethane (resin solid concentration) is prepared or when the cross-linking agent is blended with the aqueous polyurethane resin composition, after the preparation of the aqueous polyurethane resin composition.

The content of the surfactant is not particularly limited, but is preferably 0.5 to 10 parts by mass, and more preferably 1 to 7 parts by mass, relative to 100 parts by mass of the polyurethane resin (resin solid content) in the aqueous polyurethane resin composition from the viewpoint that an aqueous polyurethane resin composition excellent in storage stability and film formability can be obtained, and that a polyurethane film excellent in flexibility, tensile strength, and elongation at break can be obtained.

<Polyurethane Film>

Next, the polyurethane film of the present invention is described. The polyurethane film of the present invention is formed of the above-described aqueous polyurethane resin composition of the present invention. Such a polyurethane film can be produced by, for example, a method in which the aqueous polyurethane resin composition and a coagulating liquid are used in combination, that is, the salt coagulation method. Specifically, such a method includes a method in which a mold is immersed in the coagulating liquid to form a coagulation layer on the mold, and this is immersed in the aqueous polyurethane resin composition to form a film, followed by drying, a method in which the aqueous polyurethane resin composition is applied or done likewise onto a mold to form an aqueous polyurethane resin composition layer on the mold, and the coagulating liquid is applied or done likewise onto this to form a film, followed by drying, and the like.

The coagulating liquid is obtained by dissolving a coagulant using water or alcohol as a solvent. The coagulant used in the present invention includes, for example, inorganic salts such as halogenated metals (for example, sodium chloride, calcium chloride, magnesium chloride, zinc chloride, aluminum chloride, and the like), nitric acid salts (for example, sodium nitrate, calcium nitrate, zinc nitrate, and the like), acetic acid salts (for example, sodium acetate, calcium acetate, zinc acetate, and the like), sulfuric acid salts (for example, calcium sulfate, magnesium sulfate, aluminum sulfate, and the like); and acids such as formic acid, acetic acid, citric acid, and boric acid. One of such coagulants may be used alone or two or more of these may be used in combination. In addition, among these coagulants, calcium nitrate is particularly preferable from the viewpoint that it is excellent in coagulability, so that the coagulation effect can be obtained in a short period of time. Moreover, the above-described coagulating liquid may be blended with a small amount of surfactant in order to uniformly apply the coagulant onto a mold, and may be blended with calcium carbonate or calcium stearate in order to prevent the film from sticking, as necessary.

In addition, the mold for use in the production of the polyurethane film is not particularly limited, and for example, various conventionally known molds of porcelain, glass, metal, and the like can be used. The preheating temperature for the mold and the immersion time can be set as appropriate depending on the composition of the aqueous polyurethane resin composition and the film thickness of the polyurethane film. In addition, the molding temperature is also not particularly limited, but is preferably 100 to 200°C, and more preferably 110 to 200°C, in order to shorten the molding time.

The film thickness of the polyurethane film of the present invention thus obtained varies depending on the usage and is not particularly limited, but is preferably 0.01 to 1 mm, and more preferably 0.02 to 0.5 mm.

[Examples]

Hereinafter, the present invention is described in further detail based on Examples and Comparative Examples; however, the present invention is not limited to Examples described below. Note that (A) polyisocyanates, (B) polyols, (C) a carboxyl group-containing diol, an amine for neutralization, and (D) polyamines used in Examples and Comparative Examples are shown in Table 1.

[Table 1]

|  | Abbreviation | Name, etc. | Number of functional groups | Mn |
|---|---|---|---|---|
| (A) Polyisocyanate | | | | |
|  | H12MDI | Dicyclohexylmethane diisocyanate | 2 | 262 |
|  | MDI | Diphenylmethane diisocyanate | 2 | 250 |
| (B) Polyol | | | | |
| (b-1) | PPG600 | Polypropylene glycol | 2 | 600 |
|  | PPG1000 | Polypropylene glycol | 2 | 1000 |
|  | PPG2000 | Polypropylene glycol | 2 | 2000 |
|  | PPG8000 | Polypropylene glycol | 2 | 8000 |
|  | PPG10000 | Polypropylene glycol | 2 | 10000 |
| (b-2) | PTMG1000 | Polytetramethylene glycol | 2 | 1000 |
|  | PTMG2000 | Polytetramethylene glycol | 2 | 2000 |
|  | PTMG3000 | Polytetramethylene glycol | 2 | 3000 |
|  | PTMG4000 | Polytetramethylene glycol | 2 | 4000 |

(continued)

| (B) Polyol | | | | |
|---|---|---|---|---|
| | PPG400 | Polypropylene glycol | 2 | 400 |
| | PTMG650 | Polytetramethylene glycol | 2 | 650 |
| | 1,4-BD | 1,4-Butanediol | 2 | 90 |
| | TMP | Trimethylolpropane | 3 | 134 |
| | PEG1000 | Polyethylene glycol | 2 | 1000 |
| | PEG3000 | Polyethylene glycol | 2 | 3000 |
| Others | BP-1010 | PEG/PPG=1/9 Block copolymer ("ENHOU BP-1010" produced by En Hou Polymer Chemical Industrial Co., Ltd.) | 2 | 1000 |
| | DC-1100E | PEG/PTMG=65/35 Random copolymer ("POLYCERIN DC-1100E" produced by NOF CORPORATION) | 2 | 1000 |
| | DC-3000E | PEG/PTMG=65/35 Random copolymer ("POLYCERIN DC-3000E" produced by NOF CORPORATION) | 2 | 3000 |
| | UH-300 | Crystalline polycarbonate diol ("ETERNACOLL UH-300" produced by UBE Corporation) | 2 | 3000 |
| | C-3090 | Non-crystalline polycarbonate diol ("KURARAY POLYOL C-3090" produced by Kuraray Co., Ltd.) | 2 | 3000 |
| | P-3010 | Adipic acid-based polyester diol ("KURARAY POLYOL P-3010" produced by Kuraray Co., Ltd.) | 2 | 3000 |
| (C) Carboxyl group-containing diol | | | | |
| | DMPA | Dimethylol propionic acid | 2 | 134 |
| Amine for neutralization | | | | |
| | TEA | Triethylamine | 1 | 101 |
| (D) Polyamine | | | | |
| | EDA | Ethylenediamine | 2 | 60 |
| | DETA | Diethylenetriamine | 3 | 103 |

In addition, the non-volatile content of polyurethane in the aqueous polyurethane resin composition was measured by a method described below.

<Non-volatile Content of Polyurethane>

On a plate made of an aluminum foil, 1 g of the aqueous polyurethane resin composition was weighed and placed, and was dried in an oven at 105°C for 30 minutes, and the non-volatile content of polyurethane was calculated in accordance with the following formula:

```
Non-volatile content of polyurethane = Mass of the

polyurethane resin after drying / Mass of the aqueous

polyurethane resin composition before drying × 100
```

(Example 1)

Into a four-necked flask equipped with an agitator, a reflux cooling tube, a thermometer, and a nitrogen blowing tube, PTMG3000 (349.1 g, 116.4 mmol), PPG1000 (25.3 g, 25.3 mmol), DMPA (8.1 g, 60.4 mmol), and 111.7 g of methyl ethyl ketone as a solvent were weighed and taken, were uniformly mixed, and then MDI (37.9 g, 151.6 mmol) and H12MDI (26.5 g, 101.1 mmol) were added as organic polyisocyanates, followed by reacting at 80±5°C for 90 minutes to obtain a methyl ethyl ketone solution of an isocyanate group-terminated urethane prepolymer in which the content of free isocyanate groups was 0.95% by mass. To this solution, TEA (6.1 g, 60.4 mmol) was added and neutralization reaction was conducted at 50°C to obtain a methyl ethyl ketone solution containing a neutralized product of the isocyanate group-terminated urethane prepolymer. To this solution, 1200 g of water was gradually added, followed by stirring to emulsify and disperse the isocyanate group-terminated urethane prepolymer. To this emulsification and dispersion liquid, EDA (1.7 g, 28.3 mmol) and DETA (1.3 g, 12.6 mmol) were added as chain extenders, followed by stirring at 40±5°C for 90 minutes. Thereafter, solvent removal (methyl ethyl ketone removal) process was conducted under reduced pressure at 40°C to obtain an aqueous polyurethane resin composition having a non-volatile content of polyurethane of 45.0% by mass (yield: 1 kg).

The proportion of the total amount of (b-1) PPG and (b-2) PTMG in the entire amount of (B) the polyols, the mass ratio between (b-1) PPG and (b-2) PTMG, the molar ratio between isocyanate groups and hydroxyl groups, the content of free isocyanate groups in the isocyanate-terminated prepolymer, the content of carboxy groups and carboxylate groups in the aqueous polyurethane resin, as well as the content of trifunctional polyamine in (D) the polyamine in this aqueous polyurethane resin composition were calculated from the amounts of the raw materials prepared. These results are shown in Table 2.

Next, to the aqueous polyurethane resin composition (500 g) thus obtained, a water-dispersible carbodiimide-based cross-linking agent ("NK ASSIST CI-02" produced by Nicca Chemical Co., Ltd., non-volatile content: 40% by mass) (5.0 g) and water (620 g) for dilution were added, followed by mixing to obtain an aqueous polyurethane treatment liquid in which the non-volatile content of polyurethane was adjusted to 20% by mass. In this treatment liquid, the content of the reactive groups (-N=C=N-) contained in the cross-linking agent was 15 mol relative to 100 mol of carboxy groups in the aqueous polyurethane resin.

(Examples 2 to 25 and Comparative Examples 1 to 15)

Aqueous polyurethane resin compositions and aqueous polyurethane treatment liquids were prepared in the same manner as in Example 1 except that the types and amounts of (A) a polyisocyanate, (B) polyols, (C) a diol having a carboxy group and/or a carboxylate group, an amine for neutralization, and (D) a polyamine were changed to those shown in Tables 2 to 6. In these treatment liquids as well, the content of the reactive groups (-N=C=N-) contained in the cross-linking agent was 15 mol relative to 100 mol of carboxy groups in the aqueous polyurethane resin. In addition, the proportion of the total amount of (b-1) PPG and (b-2) PTMG in the entire amount of (B) the polyols, the mass ratio between (b-1) PPG and (b-2) PTMG, the molar ratio between isocyanate groups and hydroxyl groups, the content of free isocyanate groups in the isocyanate-terminated prepolymer, the content of carboxy groups and carboxylate groups in the aqueous polyurethane resin, as well as the content of trifunctional polyamine in (D) the polyamine in each obtained aqueous polyurethane resin composition were calculated in the same manner as in Example 1. These results are shown in Tables 2 to 6.

(Example 26)

To the aqueous polyurethane resin composition (500 g) obtained in Example 2, a water-dispersible carbodiimide-based cross-linking agent ("NK ASSIST CI-02" produced by Nicca Chemical Co., Ltd., non-volatile content: 40% by mass) (5.0 g) was added, further ammonium lauryl sulfate salt (5.7 g) was added as a surfactant while stirring with dispersion blades, and lastly water for dilution was added until the total amount became 1125 g, followed by mixing to obtain an aqueous polyurethane treatment liquid in which the non-volatile content of polyurethane was adjusted to 20% by mass. In this treatment liquid, the content of the reactive groups (-N=C=N-) contained in the cross-linking agent was 15 mol relative to 100 mol of carboxy groups in the aqueous polyurethane resin. In addition, the content of the surfactant in this treatment liquid was 2.5 parts by mass relative to 100 parts by mass of the polyurethane resin (resin solid content).

(Examples 27 to 31)

Aqueous polyurethane treatment liquids were prepared in the same manner as in Example 26 except that the surfactant was changed to those shown in Table 7. In these treatment liquids as well, the content of the reactive groups (-N=C=N-) contained in the cross-linking agent was 15 mol relative to 100 mol of carboxy groups in the aqueous polyurethane resin. In addition, the content of the surfactant in these treatment liquids was also 2.5 parts by mass relative to 100 parts by mass of the polyurethane resin (resin solid content).

For the aqueous polyurethane resin compositions and the aqueous polyurethane treatment liquids obtained in Examples and Comparative Examples, storage stability, film formability, flexibility, tensile strength, and elongation at break were measured by methods described below. These results are shown in Tables 2 to 7. Note that for polyurethane films of which film formability was defective, the evaluation of flexibility, tensile strength, and elongation at break was not conducted.

<Storage Stability>

The aqueous polyurethane resin compositions and the aqueous polyurethane treatment liquids were each sealed in a transparent 200-ml bottle, and this bottle was left to stand in an oven at 45°C for one month. Whether sedimentation of resin contents or change in particle size was present or absent in the aqueous polyurethane resin compositions and the aqueous polyurethane treatment liquids after being left to stand was observed, and the storage stability was evaluated under the criteria described below.

A: There is no sedimentation of resin contents.
B: There is sedimentation of resin contents.

<Film formability>

A pottery plate (having a length of 200 mm × a width of 75 mm) was dipped into an aqueous solution of calcium nitrate having a concentration of 10% for 10 seconds such that the pottery plate was dipped therein by 180 mm in the vertical direction, and thereafter the pottery plate was pulled out, and was dried in an oven at 100 °C for 3 minutes to form a calcium nitrate film on the pottery plate. Next, the pottery plate on the surface of which the calcium nitrate film had been formed was dipped into the aqueous polyurethane resin composition or aqueous polyurethane treatment liquid which was diluted to have a non-volatile content of polyurethane of 20% by mass for 10 seconds, such that the calcium nitrate film was dipped therein by 150 mm in the vertical direction, and thereafter the pottery plate was pulled out. In this way, a gel film of the aqueous polyurethane resin gelated by salt coagulation was formed on the surface of the pottery plate. Thereafter, this gel film was dried and matured in an oven at 120°C for 20 minutes, and the film was peeled from the pottery plate to obtain a polyurethane film having a film thickness of 0.1 mm. This polyurethane film was visually observed and the film formability was evaluated in accordance with the criteria described below.

A: There are neither cracks nor pinholes in the film.
B: There are cracks and/or pinholes in the film.

<Tensile Test>

The polyurethane film (film thickness: 0.1 mm) prepared during the above-described evaluation of the film formability was cut in compliance with European Norm EN455-2:2009 to prepare a test piece. Both ends of this test piece was fixed with chucks (gauge length: 33 mm), and a tensile test was conducted by using a tensile testing machine ("Autograph AGS-X" manufactured by Shimadzu Corporation).

<Flexibility>

In the above-described tensile test, the tensile load at the time when the test piece was elongated by 100% was measured, and the 100% modulus was obtained in accordance with the following formula:

$$100\% \text{ modulus (MPa)} = \text{Tensile load (N) at } 100\% \text{ elongation / Cross-sectional area of the test piece (mm}^2)$$

and the flexibility evaluated in accordance with the criteria described below.

A: The 100% modulus is 1.0 MPa or more and less than 3.0 MPa.
B: The 100% modulus is 3.0 MPa or more and less than 4.0 MPa.
C: The 100% modulus is less than 1.0 MPa or 4.0 MPa or more.

Note that a smaller value of the 100% modulus indicates that the film is more flexible. When the 100% modulus was less than 1.0 MPa, the film was too flexible, and was thus determined to be defective as a film-formed body.

<Tensile Strength>

In the above-described tensile test, the tensile load at the time when the film was broken was measured, and the tensile strength was evaluated in accordance with the criteria described below.

A: The tensile load at the time when the film was broken is 7.0 N or more.
B: The tensile load at the time when the film was broken is 6.0 N or more and less than 7.0 N.
C: The tensile load at the time when the film was broken is 5.0 N or more and less than 6.0 N.
D: The tensile load at the time when the film was broken is less than 5.0 N.

<Elongation at Break>

In the above-described tensile test, the amount by which the interval between gauge lines was elongated until the test piece was broken was measured, and the elongation at break was obtained in accordance with the following formula:

```
Elongation at break (%) = Amount by which the interval between gauge lines was elongated / Gauge length before the

test × 100
```

and the elongation at break was evaluated in accordance with the criteria described below.

A: The elongation at break is 700% or more.
B: The elongation at break is 600% or more and less than 700%.
C: The elongation at break is 500% or more and less than 600%.
D: The elongation at break is less than 500%.

[Table 2]

| | | | Example 1 | Example 2 | Example 3 | Example 4 | Example 5 | Example 6 | Example 7 | Example 8 |
|---|---|---|---|---|---|---|---|---|---|---|
| Amount of each component blended [g] | | | | | | | | | | |
| (A) | | H12MDI | 26.5 | 26.0 | 32.8 | 32.8 | 26.0 | 26.0 | 26.0 | 26.0 |
| | | MDI | 37.9 | 37.2 | 47.0 | 47.0 | 37.2 | 37.2 | 37.2 | 37.2 |
| (B) | (b-1) | PPG600 | | | | | | | | |
| | | PPG1000 | 25.3 | 19.1 | 18.5 | 18.5 | 19.1 | 19.1 | 19.1 | 19.1 |
| | | PPG2000 | | | | | | | | |
| | | PPG8000 | | | | | | | | |
| | | PPG10000 | | | | | | | | |
| | (b-2) | PTMG1000 | | | | | | | | |
| | | PTMG2000 | | | | | | | | |
| | | PTMG3000 | 349.1 | 262.8 | 252.0 | 252.0 | 262.8 | 262.8 | 262.8 | 262.8 |
| | | PTMG4000 | | | | | | | | |
| | Others | PPG400 | | | | | | | | |
| | | PTMG650 | | | | | | | | |
| | | 1,4-BD | | | | | | | | |
| | | TMP | | | | | | | | |
| | | PEG1000 | | | | | | | | |
| | | PEG3000 | | 93.8 | | | | | | |
| | | BP-1010 | | | 87.8 | | | | | |
| | | DC-1100E | | | | 87.8 | | | | |
| | | DC-3000E | | | | | 93.8 | | | |
| | | UH-300 | | | | | | 93.8 | | |
| | | C-3090 | | | | | | | 93.8 | |
| | | P-3010 | | | | | | | | 93.8 |
| (C) | | DMPA | 8.1 | 8.2 | 8.1 | 8.1 | 8.2 | 8.2 | 8.2 | 8.2 |

(continued)

| | | Example 1 | Example 2 | Example 3 | Example 4 | Example 5 | Example 6 | Example 7 | Example 8 |
|---|---|---|---|---|---|---|---|---|---|
| Amount of each component blended [g] | | | | | | | | | |
| Amine for neutralization | TEA | 6.1 | 6.2 | 6.1 | 6.1 | 6.2 | 6.2 | 6.2 | 6.2 |
| (D) | EDA | 1.7 | 1.7 | 2.2 | 2.2 | 1.7 | 1.7 | 1.7 | 1.7 |
| | DETA | 1.3 | 1.3 | 1.6 | 1.6 | 1.3 | 1.3 | 1.3 | 1.3 |
| [(b-1)+(b-2)]/(B) [% by mass] | | 100.0 | 75.0 | 75.5 | 75.5 | 75.0 | 75.0 | 75.0 | 75.0 |
| Mass ratio (b-1)/(b-2) | | 6.8/93.2 | 6.8/93.2 | 6.8/93.2 | 6.8/93.2 | 6.8/93.2 | 6.8/93.2 | 6.8/93.2 | 6.8/93.2 |
| NCO/OH molar ratio | | 100/80 | 100/80 | 100/80 | 100/80 | 100/80 | 100/80 | 100/80 | 100/80 |
| Content of free NCO [% by mass] | | 0.95 | 0.92 | 1.18 | 1.18 | 0.92 | 0.92 | 0.92 | 0.92 |
| Content of COOH [% by mass] | | 0.61 | 0.61 | 0.60 | 0.60 | 0.61 | 0.61 | 0.61 | 0.61 |
| Content of trifunctional polyamine [% by mass] | | 42.7 | 43.1 | 42.7 | 42.7 | 43.2 | 43.2 | 43.2 | 43.1 |
| Aqueous polyurethane resin composition | | | | | | | | | |
| Storage stability | | A | A | A | A | A | A | A | A |
| Film formability | | A | A | A | A | A | A | A | A |
| Flexibility | | A | A | A | A | A | A | A | B |
| Tensile strength | | A | C | B | B | B | B | B | A |
| Elongation at break | | A | B | B | B | B | B | B | B |
| Aqueous polyurethane treatment liquid | | | | | | | | | |
| Storage stability | | A | A | A | A | A | A | A | A |
| Film formability | | A | A | A | A | A | A | A | A |
| Flexibility | | A | A | A | A | A | A | A | B |
| Tensile strength | | A | B | B | B | B | B | B | A |
| Elongation at break | | A | B | B | B | B | B | B | B |

[Table 3]

| | | | Example 9 | Example 10 | Example 11 | Example 12 | Example 13 | Example 14 | Example 15 | Example 16 |
|---|---|---|---|---|---|---|---|---|---|---|
| Amount of each component blended [g] | | | | | | | | | | |
| (A) | | H12MDI | 50.8 | 25.5 | 20.4 | 47.6 | 21.5 | 49.5 | 34.8 | 30.6 |
| | | MDI | 72.7 | 36.5 | 29.2 | 68.1 | 30.8 | 70.9 | 49.8 | 43.8 |
| (B) | (b-1) | PPG600 | 21.8 | 26.3 | | | | | 24.9 | |
| | | PPG1000 | | | | | | | | |
| | | PPG2000 | | | | | | | | |
| | | PPG8000 | | | | | 7.2 | 5.9 | | |
| | | PPG10000 | | | 27.2 | 22.7 | | | | 26.3 |
| | (b-2) | PTMG1000 | 290.8 | | | 297.5 | | 309.1 | | |
| | | PTMG2000 | | | | | | | 328.5 | 337.3 |
| | | PTMG3000 | | | | | | | | |
| | | PTMG4000 | | 350.3 | 362.5 | | 379.3 | | | |
| | Others | PPG400 | | | | | | | | |
| | | PTMG650 | | | | | | | | |
| | | 1,4-BD | | | | | | | | |
| | | TMP | | | | | | | | |
| | | PEG1000 | | | | | | | | |
| | | PEG3000 | | | | | | | | |
| | | BP-1010 | | | | | | | | |
| | | DC-1100E | | | | | | | | |
| | | DC-3000E | | | | | | | | |
| | | UH-300 | | | | | | | | |
| | | C-3090 | | | | | | | | |
| | | P-3010 | | | | | | | | |
| (C) | | DMPA | 8.1 | 8.5 | 8.3 | 8.5 | 8.8 | 8.9 | 8.0 | 8.4 |

(continued)

| | | Example 9 | Example 10 | Example 11 | Example 12 | Example 13 | Example 14 | Example 15 | Example 16 |
|---|---|---|---|---|---|---|---|---|---|
| Amount of each component blended [g] | | | | | | | | | |
| Amine for neutralization | TEA | 6.1 | 6.4 | 6.3 | 6.4 | 6.6 | 6.7 | 6.0 | 6.3 |
| (D) | EDA | 3.3 | 1.7 | 1.3 | 3.1 | 1.4 | 3.3 | 2.3 | 2.0 |
| | DETA | 2.5 | 1.3 | 1.0 | 2.3 | 1.1 | 2.4 | 1.7 | 1.5 |
| [(b-1)+(b-2)]/(B) [% by mass] | | 100.0 | 100.0 | 100.0 | 100.0 | 100.0 | 100.0 | 100.0 | 100.0 |
| Mass ratio (b-1)/(b-2) | | 7.0/93.0 | 7.0/93.0 | 7.0/93.0 | 7.1/92.9 | 7.0/93.0 | 7.1/92.9 | 7.0/93.0 | 7.2/92.8 |
| NCO/OH molar ratio | | 100/80 | 100/80 | 100/80 | 100/80 | 100/80 | 100/80 | 100/80 | 100/80 |
| Content of free NCO [% by mass] | | 1.83 | 0.91 | 0.73 | 1.72 | 0.73 | 1.72 | 1.25 | 1.10 |
| Content of COOH [% by mass] | | 0.61 | 0.63 | 0.62 | 0.64 | 0.63 | 0.64 | 0.60 | 0.63 |
| Content of trifunctional polyamine [% by mass] | | 42.7 | 42.7 | 42.7 | 42.7 | 42.7 | 42.7 | 42.7 | 42.7 |
| Aqueous polyurethane resin composition | | | | | | | | | |
| Storage stability | | A | A | A | A | A | A | A | A |
| Film formability | | A | A | A | A | A | A | A | A |
| Flexibility | | B | A | A | B | A | A | A | A |
| Tensile strength | | B | C | C | C | B | B | B | B |
| Elongation at break | | B | B | B | B | B | B | B | B |
| Aqueous polyurethane treatment liquid | | | | | | | | | |
| Storage stability | | A | A | A | A | A | A | A | A |
| Film formability | | A | A | A | A | A | A | A | A |
| Flexibility | | B | A | A | B | A | B | A | B |
| Tensile strength | | B | B | B | B | B | B | B | B |
| Elongation at break | | B | B | B | B | B | B | B | B |

[Table 4]

| | | | Example 17 | Example 18 | Example 19 | Example 20 | Example 21 | Example 22 | Example 23 | Example 24 | Example 25 |
|---|---|---|---|---|---|---|---|---|---|---|---|
| Amount of each component blended [g] | | | | | | | | | | | |
| (A) | | H12MDI | 24.8 | 33.1 | 34.4 | 61.5 | 17.6 | 25.9 | 26.6 | 26.5 | 26.5 |
| | | MDI | 35.5 | 47.3 | 49.3 | 88.0 | 25.2 | 37.1 | 38.1 | 37.9 | 38.0 |
| (B) | (b-1) | PPG600 | | | | 19.4 | | | | | |
| | | PPG1000 | 2.4 | | | | | | 25.4 | 25.3 | 25.3 |
| | | PPG2000 | | 178.3 | 211.0 | | | 24.7 | | | |
| | | PPG8000 | | | | | | | | | |
| | | PPG10000 | | | | | 28.6 | | | | |
| | (b-2) | PTMG1000 | | | | 257.0 | | | | | |
| | | PTMG2000 | | 178.3 | 140.7 | | | | | | |
| | | PTMG3000 | 376.2 | | | | | | 350.2 | 348.9 | 349.2 |
| | | PTMG4000 | | | | | 370.0 | 346.1 | | | |
| | Others | PPG400 | | | | | | | | | |
| | | PTMG650 | | | | | | | | | |
| | | 1,4-BD | | | | 5.1 | | | 2.7 | | |
| | | TMP | | 1.3 | 2.2 | | | | | | |
| | | PEG1000 | | | | | | | | | |
| | | PEG3000 | | | | | | | | | |
| | | BP-1010 | | | | | | | | | |
| | | DC-1100E | | | | | | | | | |
| | | DC-3000E | | | | | | | | | |
| | | UH-300 | | | | | | | | | |
| | | C-3090 | | | | | | | | | |
| | | P-3010 | | | | | | | | | |
| (C) | | DMPA | 8.2 | 8.0 | 8.4 | 8.6 | 7.5 | 13.3 | 4.0 | 8.1 | 8.1 |

(continued)

| | | Example 17 | Example 18 | Example 19 | Example 20 | Example 21 | Example 22 | Example 23 | Example 24 | Example 25 |
|---|---|---|---|---|---|---|---|---|---|---|
| Amount of each component blended [g] | | | | | | | | | | |
| Amine for neutralization | TEA | 6.2 | 6.1 | 6.3 | 6.5 | 5.7 | 100 | 30 | 6.1 | 6.1 |
| (D) | EDA | 1.6 | 2.2 | 2.3 | 7.4 | 0.2 | 1.7 | 1.8 | 0.2 | 2.7 |
| | DETA | 1.2 | 1.6 | 1.7 | 3.0 | 0.9 | 1.3 | 1.3 | 3.1 | 0.3 |
| [(b-1)+(b-2)]/(B) [% by mass] | | 100.0 | 99.6 | 99.4 | 98.2 | 100.0 | 100.0 | 99.3 | 100.0 | 100.0 |
| Mass ratio (b-1)/(b-2) | | 0.6/99.4 | 50.0/50.0 | 60.0/40.0 | 7.0/93.0 | 7.2/92.8 | 6.7/93.3 | 6.8/93.2 | 6.8/93.2 | 6.8/93.2 |
| NCO/OH molar ratio | | 100/80 | 100/80 | 100/80 | 100/70 | 100/90 | 100/80 | 100/80 | 100/80 | 100/80 |
| Content of free NCO [% by mass] | | 0.89 | 1.19 | 1.24 | 3.36 | 0.31 | 0.93 | 0.97 | 0.95 | 0.95 |
| Content of COOH [% by mass] | | 0.62 | 0.60 | 0.62 | 0.65 | 0.56 | 0.99 | 0.30 | 0.61 | 0.61 |
| Content of trifunctional polyamine [% by mass] | | 42.7 | 42.7 | 42.7 | 29.0 | 81.1 | 42.8 | 42.1 | 95.4 | 8.9 |
| Aqueous polyurethane resin composition | | | | | | | | | | |
| Storage stability | | A | A | A | A | A | A | B | A | A |
| Film formability | | A | A | A | A | A | A | A | A | A |
| Flexibility | | A | A | A | B | A | A | A | B | A |
| Tensile strength | | B | B | C | B | C | B | B | B | C |
| Elongation at break | | B | B | B | C | B | C | B | C | B |
| Aqueous polyurethane treatment liquid | | | | | | | | | | |
| Storage stability | | A | A | A | A | A | A | B | A | A |
| Film formability | | A | A | A | A | A | A | A | A | A |
| Flexibility | | A | A | B | B | A | A | A | B | A |
| Tensile strength | | B | B | B | B | B | B | B | B | B |
| Elongation at break | | B | B | B | C | B | C | B | C | B |

[Table 5]

| | | | Comp.Ex. 1 | Comp.Ex. 2 | Comp.Ex. 3 | Comp.Ex. 4 | Comp.Ex. 5 | Comp.Ex. 6 | Comp.Ex. 7 | Comp.Ex. 8 | Comp.Ex. 9 |
|---|---|---|---|---|---|---|---|---|---|---|---|
| Amount of each component blended [g] | | | | | | | | | | | |
| (A) | | H12MDI | 24.9 | 24.5 | 26.5 | 24.6 | 49.4 | 26.5 | 26.5 | 26.5 | 26.5 |
| | | MDI | 35.7 | 35.1 | 37.9 | 35.1 | 70.7 | 37.9 | 37.9 | 37.9 | 37.9 |
| (B) | (b-1) | PPG600 | | | | | | | | | |
| | | PPG1000 | | | | | 315.9 | 25.3 | 25.3 | 25.3 | 25.3 |
| | | PPG2000 | | | | | | | | | |
| | | PPG8000 | | | | | | | | | |
| | | PPG10000 | | | | | | | | | |
| | (b-2) | PTMG1000 | | | | | | | | | |
| | | PTMG2000 | | | | | | | | | |
| | | PTMG3000 | 378.0 | 353.6 | 349.1 | 353.6 | | | | | |
| | | PTMG4000 | | | | | | | | | |
| | Others | PPG400 | | | | | | | | | |
| | | PTMG650 | | | | | | | | | |
| | | 1,4-BD | | | | | | | | | |
| | | TMP | | | | | | | | | |
| | | PEG1000 | | | | | | | | | |
| | | PEG3000 | | 25.7 | | | | | | | |
| | | BP-1010 | | | 25.3 | | | | | | |
| | | DC-1100E | | | | | | | | | |
| | | DC-3000E | | | | 25.7 | | 349.1 | | | |
| | | UH-300 | | | | | | | 349.1 | | |
| | | C-3090 | | | | | | | | 349.1 | |
| | | P-3010 | | | | | | | | | 349.1 |
| (C) | | DMPA | 8.6 | 8.2 | 8.1 | 8.2 | 8.2 | 8.1 | 8.1 | 8.1 | 8.1 |

EP 4 183 810 A1

EP 4 183 810 A1

(continued)

| | | Comp.Ex. 1 | Comp.Ex. 2 | Comp.Ex. 3 | Comp.Ex. 4 | Comp.Ex. 5 | Comp.Ex. 6 | Comp.Ex. 7 | Comp.Ex. 8 | Comp.Ex. 9 |
|---|---|---|---|---|---|---|---|---|---|---|
| Amount of each component blended [g] | | | | | | | | | | |
| Amine for neutralization | TEA | 6.5 | 6.2 | 6.1 | 5.7 | 6.2 | 6.1 | 6.1 | 6.1 | 6.1 |
| (D) | EDA | 1.6 | 1.6 | 1.7 | 1.6 | 3.3 | 1.7 | 1.7 | 1.7 | 1.7 |
| | DETA | 1.2 | 1.2 | 1.3 | 1.2 | 2.4 | 1.3 | 1.3 | 1.3 | 1.3 |
| [(b-1)+(b-2)]/(B) [% by mass] | | 100.0 | 93.2 | 93.2 | 93.2 | 100.0 | 6.8 | 6.8 | 6.8 | 6.8 |
| Mass ratio (b-1)/(b-2) | | 0/100 | 0/100 | 0/100 | 0/100 | 100/0 | 100/0 | 100/0 | 100/0 | 100/0 |
| NCO/OH molar ratio | | 100/80 | 100/80 | 100/80 | 100/80 | 100/80 | 100/80 | 100/80 | 100/80 | 100/80 |
| Content of free NCO [% by mass] | | 0.89 | 0.88 | 0.95 | 0.88 | 1.78 | 0.95 | 0.95 | 0.95 | 0.95 |
| Content of COOH [% by mass] | | 0.64 | 0.61 | 0.61 | 0.61 | 0.61 | 0.61 | 0.61 | 0.61 | 0.61 |
| Content of trifunctional polyamine [% by mass] | | 42.7 | 42.7 | 42.7 | 42.7 | 42.7 | 42.7 | 42.7 | 42.7 | 42.7 |
| Aqueous polyurethane resin composition | | | | | | | | | | |
| Storage stability | | A | A | A | A | A | A | A | A | A |
| Film formability | | B | B | A | A | A | A | A | A | A |
| Flexibility | | --- | --- | C | A | C | C | C | C | C |
| Tensile strength | | --- | --- | D | D | D | D | B | B | B |
| Elongation at break | | --- | --- | A | B | A | D | D | D | D |
| Aqueous polyurethane treatment liquid | | | | | | | | | | |
| Storage stability | | A | A | A | A | A | A | A | A | A |
| Film formability | | B | B | A | A | A | A | A | A | A |
| Flexibility | | --- | --- | C | C | C | C | C | C | C |
| Tensile strength | | --- | --- | D | D | D | D | B | B | B |
| Elongation at break | | --- | --- | A | B | A | D | D | D | D |

22

[Table 6]

| | | | Comp.Ex. 10 | Comp.Ex. 11 | Comp.Ex. 12 | Comp.Ex. 13 | Comp.Ex. 14 | Comp.Ex. 15 |
|---|---|---|---|---|---|---|---|---|
| Amount of each component blended [g] | | | | | | | | |
| (A) | | H12MDI | 26.5 | 25.5 | 25.5 | 31.0 | 63.7 | 34.4 |
| | | MDI | 37.9 | 36.5 | 36.5 | 44.4 | 91.2 | 49.3 |
| (B) | (b-1) | PPG600 | | | | | | |
| | | PPG1000 | | 12.2 | 12.2 | | 18.2 | |
| | | PPG2000 | | | | | | 246.2 |
| | | PPG8000 | | | | | | |
| | | PPG10000 | | | | | | |
| | (b-2) | PTMG1000 | | | | | | |
| | | PTMG2000 | | | | | | 105.5 |
| | | PTMG3000 | | 160.5 | 160.5 | 337.7 | | |
| | | PTMG4000 | | | | | | |
| | Others | PPG400 | | | | 24.9 | | |
| | | PTMG650 | | | | | 260.8 | |
| | | 1,4-BD | | | | | | |
| | | TMP | | | | | | 2.2 |
| | | PEG1000 | | | | | | |
| | | PEG3000 | | 204.3 | | | | |
| | | BP-1010 | | | | | | |
| | | DC-1100E | 25.3 | | | | | |
| | | DC-3000E | | | | | | |
| | | UH-300 | 349.1 | | 204.3 | | | |
| | | C-3090 | | | | | | |
| | | P-3010 | | | | | | |
| (C) | | DMPA | 8.1 | 8.1 | 8.1 | 8.3 | 8.6 | 8.4 |
| Amine for neutralization | | TEA | 6.1 | 6.1 | 6.1 | 6.3 | 6.4 | 6.3 |
| (D) | | EDA | 1.7 | 1.7 | 1.7 | 2.0 | 4.4 | 2.3 |
| | | DETA | 1.3 | 1.3 | 1.3 | 1.5 | 3.1 | 1.7 |
| [(b-1)+(b-2)]/(B) [% by mass] | | | 0.0 | 45.8 | 45.8 | 93.1 | 6.5 | 99.4 |
| Mass ratio (b-1)/(b-2) | | | 0/0 | 7.0/93.0 | 7.0/93.0 | 0/100 | 100/0 | 70.0/30.0 |
| NCO/OH molar ratio | | | 100/80 | 100/80 | 100/80 | 100/80 | 100/80 | 100/80 |
| Content of free NCO [% by mass] | | | 0.95 | 0.91 | 0.91 | 1.11 | 2.37 | 1.24 |
| Content of COOH [% by mass] | | | 0.61 | 0.61 | 0.61 | 0.62 | 0.64 | 0.62 |
| Content of trifunctional polyamine [% by mass] | | | 42.7 | 42.7 | 42.7 | 42.7 | 41.8 | 42.7 |
| Aqueous polyurethane resin composition | | | | | | | | |
| Storage stability | | | A | A | A | A | A | A |

(continued)

| Aqueous polyurethane resin composition | | | | | | |
|---|---|---|---|---|---|---|
| Film formability | A | A | B | B | B | A |
| Flexibility | C | A | --- | --- | --- | A |
| Tensile strength | B | D | --- | --- | --- | D |
| Elongation at break | D | B | --- | --- | --- | B |
| Aqueous polyurethane treatment liquid | | | | | | |
| Storage stability | A | A | A | A | A | A |
| Film formability | A | A | B | B | B | A |
| Flexibility | C | A | --- | --- | --- | A |
| Tensile strength | B | D | --- | --- | --- | C |
| Elongation at break | D | B | --- | --- | --- | B |

[Table 7]

| | | Example 2 | Example 26 | Example 27 | Example 28 | Example 29 | Example 30 | Example 31 |
|---|---|---|---|---|---|---|---|---|
| Amount of each component blended [g] | | | | | | | | |
| Aqueous polyurethane resin composition obtained in Example 2 | | 500 | 500 | 500 | 500 | 500 | 500 | 500 |
| Cross-linking agent | NK ASSIST CI-02 | 5.0 | 5.0 | 5.0 | 5.0 | 5.0 | 5.0 | 5.0 |
| Surfactant | Ammonium lauryl sulfate salt | | 5.7 | | | | | |
| | Sodium lauryl sulfate salt | | | 5.7 | | | | |
| | Polyoxyethylene (2 mol) ammonium lauryl sulfate salt | | | | 5.7 | | | |
| | Polyoxyethylene (2 mol) sodium lauryl sulfate salt | | | | | 5.7 | | |
| | Polyoxyethylene (3 mol) tristyryl phenyl ether ammonium sulfate salt | | | | | | 5.7 | |
| | Polyoxyethylene (3 mol) tristyryl phenyl ether | | | | | | | 5.7 |
| Water | | Balance | Balance | Balance | Balance | Balance | Balance | Balance |
| Total amount | | 1125 | 1125 | 1125 | 1125 | 1125 | 1125 | 1125 |
| Aqueous polyurethane treatment liquid | | | | | | | | |
| Storage stability | | A | A | A | A | A | A | A |
| Film formability | | A | A | A | A | A | A | A |
| Flexibility | | A | A | A | A | A | A | A |
| Tensile strength | | B | A | A | A | A | A | A |
| Elongation at break | | B | A | B | A | A | B | B |

As shown in Tables 2 to 7, it was found that the aqueous polyurethane resin compositions (Examples 1 to 25) and the aqueous polyurethane treatment liquids (Examples 1 to 31) of the present invention each of which contained (b-1) the polypropylene glycol having the predetermined number average molecular weight and (b-2) the polytetramethylene glycol having the predetermined number average molecular weight in the predetermined mass ratio as well as in the predetermined proportions relative to the entire amount of (B) the polyols had favorable film formability, and made it possible to obtain a polyurethane film having favorable flexibility, tensile strength, and elongation at break.

On the other hand, it was found that in the case where only (b-2) the polytetramethylene glycol having the predetermined number average molecular weight was used as (B) the polyols (Comparative Example 1) and the case where polyethylene glycol was used instead of (b-1) the polypropylene glycol having the predetermined number average molecular weight (Comparative Example 2), the film formability deteriorated.

Moreover, it was found that in the case where polyethylene glycol/polypropylene glycol copolymer was used instead of (b-1)the polypropylene glycol having the predetermined number average molecular weight (Comparative Example 3), the flexibility became too high and the tensile strength decreased, and that in the case where polyethylene glycol/polytetramethylene glycol copolymer was used instead (Comparative Example 4), the tensile strength decreased.

In addition, it was found that in the case where only (b-1) the polypropylene glycol having the predetermined number average molecular weight was used as (B) the polyols (Comparative Example 5), the flexibility became too high and the tensile strength decreased.

Moreover, it was found that in the case where polyethylene glycol/polytetramethylene glycol copolymer was used instead of (b-2) the polytetramethylene glycol having the predetermined number average molecular weight (Comparative Example 6), the flexibility became too high and the tensile strength and the elongation at break decreased, and that in the case where polycarbonate diol was used instead (Comparative Examples 7, 8) and the case where polyester diol was used instead (Comparative Example 9), the flexibility and the elongation at break decreased.

In addition, in the case where (b-1) the polypropylene glycol having the predetermined number average molecular weight or (b-2) the polytetramethylene glycol having the predetermined number average molecular weight was not used (Comparative Example 10), the flexibility and the elongation at break decreased.

Moreover, it was found that in the case where the total amount of (b-1) the polypropylene glycol having the predetermined number average molecular weight and (b-2) the polytetramethylene glycol having the predetermined number average molecular weight was less than a predetermined amount relative to the entire amount of (B) the polyols (Comparative Examples 11, 12), the tensile strength decreased (Comparative Example 11) or the film formability deteriorated (Comparative Example 12).

In addition, it was found that in the case where a polypropylene glycol having a number average molecular weight of less than the predetermined number average molecular weight was used instead of (b-1) the polypropylene glycol having the predetermined number average molecular weight (Comparative Example 13) and the case where a polytetramethylene glycol having a number average molecular weight of less than the predetermined number average molecular weight was used instead of (b-2) the polytetramethylene glycol having the predetermined number average molecular weight (Comparative Example 14), the film formability deteriorated.

Moreover, it was found that the mass ratio between (b-1) the polypropylene glycol having the predetermined number average molecular weight and (b-2) the polytetramethylene glycol having the predetermined number average molecular weight exceeded a predetermined range (Comparative Example 15), the tensile strength decreased.

[Industrial Applicability]

As described above, the present invention makes it possible to obtain an aqueous polyurethane resin composition which has favorable film formability in the salt coagulation method and which makes it possible to obtain a polyurethane film combining favorable flexibility, tensile strength at break, and elongation at break. Therefore, since the polyurethane film of the present invention combines flexibility, tensile strength at break, and elongation at break comparable to those of natural rubbers and synthetic rubbers, the polyurethane film of the present invention is useful as films and the like to be used for, for example, gloves, fingertips, condoms, and the like, and is particularly useful as films for gloves.

Claims

1. An aqueous polyurethane resin composition comprising:

an aqueous polyurethane resin which is a chain-extended product obtained from a neutralized product of an isocyanate-terminated prepolymer which is a reaction product of (A) a polyisocyanate, (B) polyols, and (C) a diol having a carboxy group and/or a carboxylate group, by using (D) a polyamine having two or more amino groups and/or imino groups in one molecule, wherein
(B) the polyols contain (b-1) a polypropylene glycol having a number average molecular weight of 600 to 10,000 and (b-2) a polytetramethylene glycol having a number average molecular weight of 1,000 to 4,000,
a total amount of (b-1) the polypropylene glycol and (b-2) the polytetramethylene glycol accounts for 50% by mass or more of an entire amount of (B) the polyols, and
a mass ratio between (b-1) the polypropylene glycol and (b-2) the polytetramethylene glycol is (b-1):(b-2)=0.5:99.5 to 60:40.

2. The aqueous polyurethane resin composition according to claim 1, wherein
a content of free isocyanate groups in the isocyanate-terminated prepolymer is 0.2 to 3.5% by mass.

3. The aqueous polyurethane resin composition according to claim 1 or 2, wherein
a content of carboxy groups and carboxylate groups in the aqueous polyurethane resin is 0.3 to 1.0% by mass.

4. The aqueous polyurethane resin composition according to any one of claims 1 to 3, wherein
a content of polyamines having three or more amino groups and/or imino groups in one molecule in (D) the polyamine having two or more amino groups and/or imino groups in one molecule is 8 to 96% by mass.

5. The aqueous polyurethane resin composition according to any one of claims 1 to 4, further comprising:
a carbodiimide-based cross-linking agent.

6. The aqueous polyurethane resin composition according to any one of claims 1 to 5, further comprising:
at least one surfactant selected from the group consisting of anionic surfactants and nonionic surfactants.

7. A polyurethane film formed of the aqueous polyurethane resin composition according to any one of claims 1 to 6.

| | | |
|---|---|---|
| **INTERNATIONAL SEARCH REPORT** | | International application No. |
| | | PCT/JP2021/025398 |

**A. CLASSIFICATION OF SUBJECT MATTER**
Int. Cl. C08G18/08(2006.01)i, C08G18/00(2006.01)i, C08G18/12(2006.01)i, C08G18/32(2006.01)i, C08G18/48(2006.01)i, C08G18/66(2006.01)i, C08J5/18(2006.01)i, C08L75/12(2006.01)i
FI: C08G18/08 019, C08G18/00 C, C08G18/12, C08G18/32 025, C08G18/48 004, C08G18/48 054, C08G18/66 066, C08J5/18 CFF, C08L75/12

According to International Patent Classification (IPC) or to both national classification and IPC

**B. FIELDS SEARCHED**

Minimum documentation searched (classification system followed by classification symbols)
Int. Cl. C08G18/00-18/87, C08L1/00-101/16, C08K3/00-13/08, C09D1/00-201/10, C09J1/00-201/10, C08J3/00-7/18

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | CN 1807481 A (INDUSTRY TECHNOLOGY RESEARCH INSTITUTE) 26 July 2006 (2006-07-26), claims, examples | 1-7 |
| X | CN 104725590 A (SHANGHAI KINGB IRDS CHEMICAL CO., LTD.) 24 June 2015 (2015-06-24), claims, examples (for example, paragraph [0043]) | 1-7 |
| X | CN 108530601 A (HEFEI SCISKY TECHNOLOGY CO., LTD.) 14 September 2018 (2018-09-14), claims, paragraph [0027], examples (for example, example 2) | 1-7 |
| X | CN 105801810 A (CHANCCHUN UNIVERSITY OF TECHNOLOGY) 27 July 2016 (2016-07-27), claims, examples (for example, example 2) | 1-7 |

☒ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06.09.2021 | 14.09.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

28

**INTERNATIONAL SEARCH REPORT**

| International application No. |
|---|
| PCT/JP2021/025398 |

C (Continuation).  DOCUMENTS CONSIDERED TO BE RELEVANT

| Category* | Citation of document, with indication, where appropriate, of the relevant passages | Relevant to claim No. |
|---|---|---|
| X | CN 105131239 A (BEIJING DECHEM CHEMICAL ENGINEERING TECHNOLOGY CO., LTD.) 09 December 2015 (2015-12-09), claims, examples (for example, example 2) | 1-7 |
| X | CN 111333808 A (MINGXIN MENGNUOKA (LIAONING) NEW MATERIALS CO., LTD.) 26 June 2020 (2020-06-26), claims, paragraph [0030], examples (for example, example 2) | 1-7 |
| X | CN 110407996 A (JIAXING UNIVERSITY) 05 November 2019 (2019-11-05), claims, examples (for example, example 2) | 1-7 |
| X | CN 110452612 A (FUZHOU SANFANG BUILDING MATERIAL CO., LTD.) 15 November 2019 (2019-11-15), claims, examples (for example, example 3) | 1-7 |
| X | CN 109705299 A (XUCHUAN CHEMICAL (SUZHOU) CO., LTD.) 03 May 2019, (2019-05-03), claims, examples, (for example, example 2) | 1-7 |
| X | CN 109608605 A (TRANSFAR CO., LTD.) 12 April 2019 (2019-04-12), claims, examples (for example, example 5) | 1-7 |
| X | JP 2018-532867 A (HENKEL AG & CO KGAA) 08 November 2018 (2018-11-08), claims, examples | 1-7 |
| X | JP 2015-531812 A (LUBRIZOL ADVANCED MATERIAL INC.) 05 November 2015 (2015-11-05), claims, examples (for example, example 5) | 1-7 |
| X | JP 2002-241463 A (DAINIPPON INK AND CHEMICALS, INC.) 28 August 2002 (2002-08-28), claims, examples (for example, example 3) | 1-7 |
| X | JP 2000-313735 A (ARAKAWA CHEMICAL INDUSTRIES, LTD.) 14 November 2000 (2000-11-14), claims, examples (for examples, example 5) | 1-7 |
| X | JP 9-291245 A (TOYO INK MANUFACTURING CO., LTD.) 11 November 1997 (1997-11-11), claims, examples (for example, paragraph [0043]) | 1-7 |

Form PCT/ISA/210 (continuation of second sheet) (January 2015)

**INTERNATIONAL SEARCH REPORT**

| International application No. |
|---|
| PCT/JP2021/025398 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 10-152639 A (TOYO INK MANUFACTURING CO., LTD.) 09 June 1998 (1998-06-09), claims, examples (for example, paragraph [0033]) | 1-7 |
| X | US 2006/0142475 A1 (INDUSTRIAL TECHNOLOGY RESEARCH INSTITUTE) 29 June 2006 (2006-06-29), claims, examples | 1-7 |
| X | JP 2002-275230 A (DAINIPPON INK AND CHEMICALS, INC.) 25 September 2002 (2002-09-25) | 1-7 |

Form PCT/ISA/210 (continuation of second sheet) (January 2015)

| Patent Documents referred to in the Report | Publication Date | Patent Family | Publication Date |
|---|---|---|---|
| CN 1807481 A | 26.07.2006 | (Family: none) | |
| CN 104725590 A | 24.06.2015 | (Family: none) | |
| CN 108530601 A | 14.09.2018 | (Family: none) | |
| CN 105801810 A | 27.07.2016 | (Family: none) | |
| CN 105131239 A | 09.12.2015 | (Family: none) | |
| CN 111333808 A | 26.06.2020 | (Family: none) | |
| CN 110407996 A | 05.11.2019 | (Family: none) | |
| CN 110452612 A | 15.11.2019 | (Family: none) | |
| CN 109705299 A | 03.05.2019 | (Family: none) | |
| CN 109608605 A | 12.04.2019 | (Family: none) | |
| JP 2018-532867 A | 08.11.2018 | US 2018/0194964 A1 claims, examples WO 2017/042178 A1 EP 3141569 A1 | |
| JP 2015-531812 A | 05.11.2015 | US 2015/0315527 A1 claims, examples (for example, example 5) WO 2014/039302 A1 | |
| JP 2002-241463 A | 28.08.2002 | (Family: none) | |
| JP 2000-313735 A | 14.11.2000 | (Family: none) | |
| JP 9-291245 A | 11.11.1997 | (Family: none) | |
| JP 10-152639 A | 09.06.1998 | (Family: none) | |
| US 2006/0142475 A1 | 29.06.2006 | TW 200621821 A | |
| JP 2002-275230 A | 25.09.2002 | US 2002/0111424 A1 EP 1209180 A1 | |

Form PCT/ISA/210 (patent family annex) (January 2015)

**REFERENCES CITED IN THE DESCRIPTION**

**Patent documents cited in the description**

- JP 2015101625 A

- JP 2008506830 A